# EUROPEAN PATENT APPLICATION

(11) **EP 4 549 064 A1**
(43) Date of publication of application: **07.05.2025**
(21) Application number: 24209615.4
(22) Date of filing: 29.10.2024
(51) Int. Cl.: B23B 39/00, B23B 39/16, B23B 41/04, B23D 13/00, B23P 23/02

(54) **WORKING AGGREGATE FOR MACHINING A WORKPIECE, WORKING CENTER AND METHOD OF MACHINING A WORKPIECE WITH SUCH AN AGGREGATE**

(30) Priority: 31.10.2023 IT 202300022944
(71) Applicant: SCM Group S.p.A., 47921 Rimini (RN) (IT)
(72) Inventor: SAVORELLI, Livio, 47921 RIMINI (RN) (IT); FIORENTINI, Luca, 47921 RIMINI (RN) (IT); ROTA, Giambattista, 47921 RIMINI (RN) (IT)
(74) Representative: Tiburzi, Andrea

(57) **Abstract**

The present invention concerns a working aggregate (1), for machining a workpiece (P), such as panels and the like, made of aluminum, bronze, plastic, wood and the like, comprising: a power take-off (2) for force coupling to an electro-spindle; a drilling unit (3), having a drill bit (31), wherein said drilling unit (3) is operatively coupled to said power take-off (2) to receive driving force for making a hole (F) on said workpiece (P) by means of said drill bit (31); and a rotary broaching unit (4), having a broaching tool (41), wherein said rotary broaching unit (4) is operatively coupled to said power take-off (2) to receive driving force for carrying out rotary broaching processing on the hole (F) made on said workpiece (P) by means of said drill bit (31).
The present invention also concerns a working center (100) and a method of machining a piece (P).

## Description

The present invention concerns an aggregate for a machining head and working center that implements such aggregate and machining method.

### Field of invention

More in detail, the invention concerns an aggregate of the aforementioned type, to be applied to an electro-spindle of a machining head, designed and realized in particular for the machining of aluminum and similar materials and for making holes in shapes, for example hexagonal.

In the following the description will be aimed in particular at the creation of a hexagonal hole on an aluminum panel, but it is clear that it should not be considered limited to this specific use.

### Prior art

As is well known currently in the field of mechanical machining, obtaining holes with precise geometries and low tolerances is a very serious technical challenge.

Traditionally, the creation of a cylindrical hole is facilitated by the use of a rotating element, making the process relatively simple.

However, obtaining a hole with a hexagonal shape or other complex geometries involves a much more elaborate procedure. In particular, initially, a circular hole is made with a smaller diameter than the desired final size. Subsequently, this hole is transformed into the desired polygonal geometry, for example hexagonal, using a so-called broaching process. Examples of processes of this type are carried out on aluminum, plastic, bronze, or extruded materials.

The broach is a linear tool with sharp edges. This tool is used to remove excess material and obtain the desired shape. Unlike rotary tools such as drills, the broach operates through a linear motion, advancing into the material and then retracting, progressively eliminating excess material. Although the broach, i.e. the tool used for broaching, can take on different shapes, depending on the type of desired cut, its operating principle remains unchanged: it progressively penetrates the material starting from a smaller section and gradually increasing its size until reaching the desired shape.

A technical evolution of traditional broaching is the rotary broaching. This technique uses an oscillating movement to remove small quantities of material at a time as the broach advances into the hole to be shaped, allowing the creation of precise geometries such as hexagonal or polygonal cavities in general.

Generally, the broaching tool can be of different types. For example, the following broaches are known:
- cylindrical broach, designed to create or finish cylindrical holes. They may have a smooth profile or feature grooves for specific functions;
- conical broach, used to create conical holes or to finish pre-existing holes with a conical profile;
- spiral broach, which features a spiral groove that aids in material removal. They are particularly useful for processes that require a high quality surface finish;
- helical broach, which has a helical profile for making holes with complex profiles;
- grooving broach, designed to create grooves or channels within a hole. For example, they can be used to make keys or retaining ring grooves;
- shape broach, which is a tool designed to produce a specific shape within a hole, such as stars, hexagons, or any other custom profile;
- rotary broach, similar to traditional broaches, but are designed to rotate during machining, allowing for more efficient material removal and a better surface finish.

Broaches can be made of different materials, such as carbide, steel, with titanium nitride or titanium-aluminum nitride coatings.

A technical problem of the solutions according to the prior art is how to integrate and optimize these advanced broaching techniques, in particular rotary broaching, on modern machine tools, such as multi-axis working centers, e.g., 3, 4, or 5 axis. In particular, there would be a need to make the most of the flexibility and precision offered by these complex machines, adapting and improving existing broaching techniques to create even more complex and precise geometries.

It appears clear that the objectives described above are not possible with known solutions.

### Purpose of the invention

In light of the above, it is therefore the aim of the present invention to propose an electro-spindle aggregate that can be moved in space, like a 3-5 axis head.

Another purpose of the invention is to allow ease of coupling the aggregate to machines according to the known art.

### Object of the invention

It is, therefore, specific object of the present invention a working aggregate, for machining a workpiece, such as panels and the like, made of aluminum, bronze, plastic, wood and the like, comprising: a power take-off for force coupling to an electro-spindle; a drilling unit, having a drill bit, wherein said drilling unit is operatively coupled to said power take-off to receive driving force for making a hole on said workpiece by means of said drill bit; and a rotary broaching unit, having a broaching tool, wherein said rotary broaching unit is operatively coupled to said power take-off to receive driving force for carrying out rotary broaching processing on the hole made on said workpiece by means of said drill bit.

Always according to the invention, said rotary broaching unit may comprise a transmission shaft for coupling to said power take-off.

Still according to the invention, said rotary broaching unit may comprise a protection spring to attenuate the shocks of machining to protect the bearings of said electro-spindle.

Further according to the invention, said working aggregate may comprise a containment casing, in which said rotary broaching unit is contained, wherein said containment casing has a lateral surface, and said drilling unit may be coupled to said lateral surface.

Preferably according to the invention, said containment casing may have a lower opening for the passage of said broaching tool, and an upper opening, arranged facing said lower opening, in correspondence with which said electro-spindle is installed.

Advantageously according to the invention, said containment casing may have a lower portion, on which said opening is obtained, wherein said lower portion is intended to contact said workpiece to keep it in position while the rotary broaching process takes place.

Always according to the invention, said drilling unit may comprise means for moving said drill bit, configured so that said drill bit can assume a retracted rest position and an extracted position, in which it can drill on said workpiece.

It is also object of the present invention a working center, for machining parts, such as panels and the like, made of aluminum, bronze, plastic, wood, and the like, comprising: a working surface, on which said workpieces to be machined can be arranged and moved, wherein said working surface extends mainly along a first axis; a support bridge arranged above said working surface, wherein said support bridge is movable with respect to said working surface along said first axis; and a machining head slidingly movable along said support bridge in a second axis perpendicular to said first axis; characterized in that said working center further comprises a working aggregate as defined above, coupled to said machining head, wherein said working aggregate can be moved with respect to said machining head according to three degrees of freedom.

Always according to the invention, said support bridge may comprise a guide oriented along said second axis, and a slide slidably coupled to said guide, wherein said machining head is coupled to said slide.

Still according to the invention, said working center may comprise members, such as a piston-cylinder group, interposed between said slide and said machining head, wherein said members are configured to translate said machining head along a third axis, perpendicular both to said first axis and to said second axis.

Advantageously according to the invention, said machining head may comprise a three-axis joint for the coupling and articulation of said working aggregate.

It is further object of the present invention a method of machining a workpiece, such as panels and the like, made of aluminum, bronze, plastic, wood, and the like, comprising the following steps: A. providing a working aggregate, as defined above; B. drilling a hole using said drill bit of said drilling unit; and C. performing a broaching operation using said broaching tool of said rotary broaching unit.

Always according to the invention, for the execution of said step B, said drill bit may be placed in the extracted position.

Still according to the invention, for the execution of said step C said drill bit may be placed in the retracted position.

### Brief description of the figures

The present invention will be now described, for illustrative but not limitative purposes, according to its preferred embodiments, with particular reference to the figures of the enclosed drawings, wherein:
figure 1 shows a perspective view of a working center that implements an aggregate machining head;
figure 2 shows a perspective view of a working aggregate according to the present invention;
figure 3 shows a side view of the working aggregate according to figure 2;
figure 4 shows a view along the section line A-A of the working aggregate according to figure 2;
figure 5 shows a bottom view of the working aggregate according to figure 2;
figure 6 shows the working aggregate according to the present invention in operating configuration; and
figure 7 shows a top view of a panel machined using the working aggregate according to the present invention.

### Detailed description

In the various figures the similar parts will be indicated with the same numerical references.

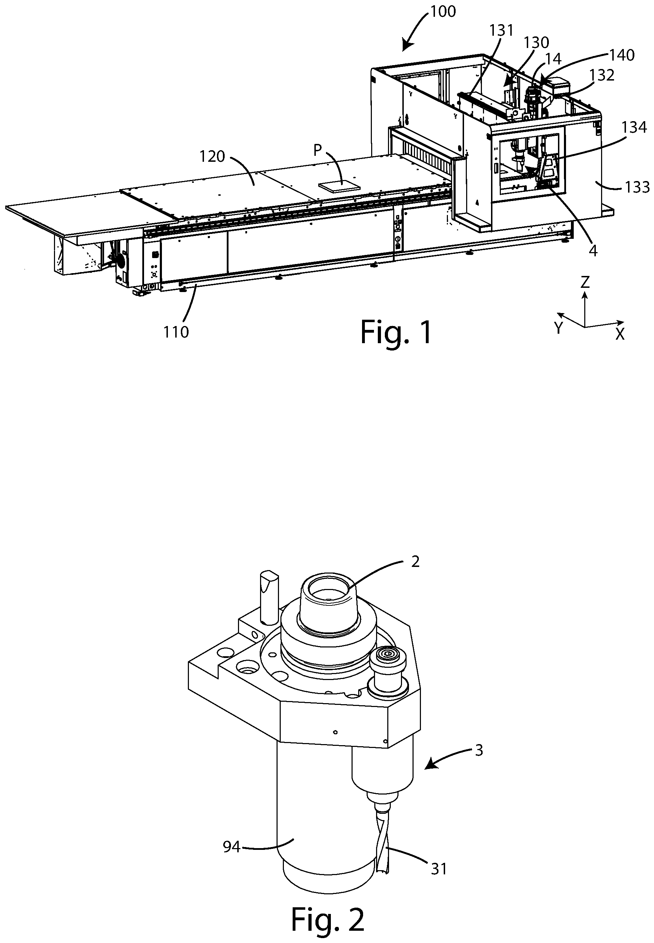

Referring to figure 1, a working center for panels, in particular panels made of aluminum, bronze, plastic, wood or similar, is observed.

This working center 1, wholly indicated with the reference number 100, is mainly intended for the machining pieces P, such as panels and the like, which can be made of different materials including aluminum, bronze, plastic, wood and other similar materials.

The working center 100 has a working surface 120, arranged on a base 110. The pieces P to be machined can be arranged and moved on said working surface.

In the context of machining centers 100 for panels P, both in aluminum and wood, there are different variations of working surface 120 that can be adopted to meet different production needs. In particular, in some embodiments the working surface 120 is flat and equipped with suction cups, which are activated pneumatically or electrically to fix the panel P to the surface 120 during machining. In other embodiments, the working surface 120 is of the movable bar type, providing bars or strips that can be positioned and moved flexibly based on the size and shape of the panel P to be machined. Each bar can be adjusted in height and position, offering flexibility in panel layout. This feature makes the movable bar table particularly suitable for machining panels P of non-standard dimensions or with particular shapes.

In some embodiments, the working centers 100 can provide a combined working surface 120, i.e., they can incorporate more than one of the aforementioned working surfaces, allowing operators to choose or combine different features based on the specific machining in progress.

The working surface 120 extends mainly along a first axis X, of the three Cartesian axes shown in the figure.

The working center 100 also comprises a support bridge 130. This bridge is mobile and can move above and with respect to the working surface 120 following the movement along the first axis X.

This type of working center 100 is known in the industry as a "gantry". Gantry-type working centers are characterized by a structure in which the machining head 140 (or machining unit) moves along a support bridge 130, which overlies the piece P to be machined. This bridge can move along the X axis. The piece P to be machined remains stationary on the underlying working surface 120.

This configuration is particularly suitable for machining large pieces P, or pieces that require machining from multiple angles.

In fact, working centers of this type have the advantage of a large work area, high stability, reducing vibrations during high-speed operations or with heavy tools, ensuring greater precision in machining.

Gantry-type working centers are also very versatile because the processing unit can be moved along the three linear axes (XYZ), as it will be better explained below, allowing a wide range of operations.

While gantry-type 100 working centers can be large, their configuration is often more optimized than other similarly sized machines, making a more efficient use of the space.

The working center 100 of figure 1 can be easily integrated with other automated systems, such as automatic warehouses or robots, for further optimization of the production process.

The support bridge also comprises a protective chassis 133, having a window 134, to allow an operator to monitor the operation of the working center 100.

Arranged on the support bridge 130, there is a processing unit 140. This machining head 140 is designed to slidably move along the support bridge 130 in a second Y axis that is perpendicular to the first X axis.

To efficiently guide and support the machining head, the support bridge 130 is provided with a guide 131, which is oriented along the second Y axis. There is also a slide 132, slidably coupled with the guide 131, and the machining head 140 is further coupled to this slide 132. The guide 132 is oriented along the Y axis.

The working center 100 comprises a working aggregate 1. This aggregate is coupled with the machining head 140 and can move relative to it with three degrees of freedom, ensuring high flexibility and advanced machining capacity.

The working aggregate 1 will be better described below.

To provide further versatility in machining, pneumatic components (not shown in the figures), such as a piston-cylinder system, have been included between the slide 132 and the machining head 140. Thanks to these pneumatic components, the machining head 140 can perform a translation along a third Z axis, which is perpendicular to both the first X axis and the second Y axis. In this way, the machining head 140, and consequently the machining unit 1, have three Cartesian degrees of freedom of translation.

Finally, the machining head 140 is equipped with a two or three- joint axis used for coupling and articulating the working aggregate 1, ensuring a further two or three rotational degrees of freedom.

The working aggregate 1, illustrated in more detail in figures 2-6, is designed for the machining pieces P, such as panels and the like, made of different materials such as aluminum, bronze, plastic, wood, and the like.

The working aggregate 1 comprises a power take-off 2, intended for force coupling with an electro-spindle 141 installed on the machining head 140. This connection is particularly suitable for transmitting the driving force coming from said electro-spindle 141 to the operational units of aggregate 1.

The working aggregate 1 comprises a drilling unit 3, which is equipped with a drill bit 31. The drilling unit 3 is operationally connected to the power take-off 2. When the power take-off 2 receives energy from the electro -spindle 141, the drill bit 31 is activated to make a circular hole F in the piece P.

Furthermore, the drilling unit 3 can be equipped with movement means (not shown in the figures) for the drill bit 31, allowing the latter to retract into a rest position when not in use, and to move to an operating position when it has to drill on the piece P (see arrows V).

The working aggregate 1 also comprises a rotary broaching unit 4 which comprises a broaching tool 41. The rotary broaching unit 4 is also operatively coupled to the power take-off 2. This means that, after the hole F is made from the drilling unit, the broaching tool 41 can perform rotary broaching machining on the hole F. The rotary broaching unit 4 comprises a drive shaft 42, which facilitates coupling with the power take-off 2, ensuring an efficient transmission of the driving force.

In the present embodiment, the broaching tool 41 is, in particular, a rotary broach, which, for example, is configured to make a hexagonal hole, starting from a cylindrical hole made by the drill bit 31. Rotating broaching, or "Rotary broaching", is a machining technique used to create precise shapes inside or outside a material. A tool is considered to have the shape of the geometry desired to be created, e.g., a hexagon. This tool not only moves forward through the material, as a traditional "drill" would, but also rotates slightly as it advances, oscillating with respect to a wobbling angle. Thanks to this combined rotation and advancement movement, the tool gradually "cuts" the desired shape in the piece P, a little at a time, allowing creating complex shapes such as hexagonal or star-shaped holes.

To ensure a longer life of the electro-spindle 141 and to protect its components, there is a protection spring 43 inside the rotary broaching unit 4. This spring 43 has the task of attenuating the impacts that may occur during machining, particularly protecting the bearings of the electro-spindle 141.

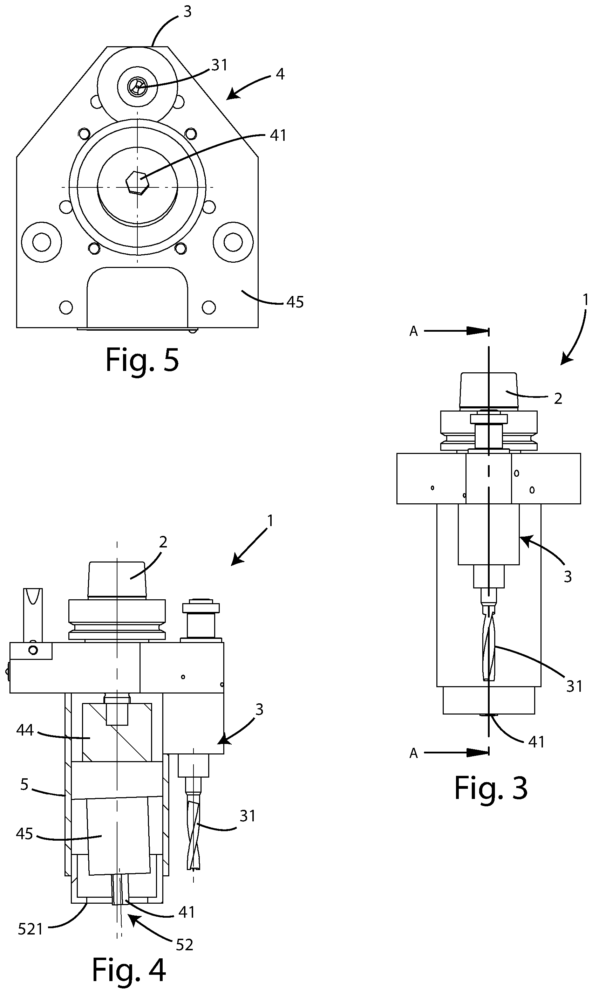

Still with reference to the figures, the broaching unit 4 comprises a body 44, in which the transmission shaft 42 and the transmission spring 43 are contained. The broaching unit 4 also comprises a tool support 45 (also visible in figure 5), for fixing the broach 41, also located inside the body 44.

As can be seen, the working aggregate 1 can be enclosed in a containment casing 5, which has a lateral surface 51 to which, in the present embodiment, the drilling unit 3 is coupled.

The containment casing 5 has a lower opening 52, through which the broaching tool 41 can pass. At the same time, a corresponding upper opening 53 is designed to accommodate the power take-off 2. This configuration allows for easy maintenance and access to both the drill bit 31 and the broaching tool 41.

The lower portion 521 of the containment casing 5, on which the opening 52 is made, performs a dual function. This lower portion 521 allows, on the one hand, the operating part to descend downwards and, on the other, ensures that the piece P on which one operates, remains stable and stationary during the machining itself. In other words, said lower portion 521 is intended to contact said workpiece P to keep it in position while rotary broaching machining takes place.

In some embodiments, the use of a locking template (not shown in the figures) may be provided. The template can be used to improve and optimize the functionality of the working aggregate 1, acting as a support for the workpiece P, ensuring that it remains firmly in position during all operational phases.

The operation of the working aggregate installed in the working center 100 described above is as follows.

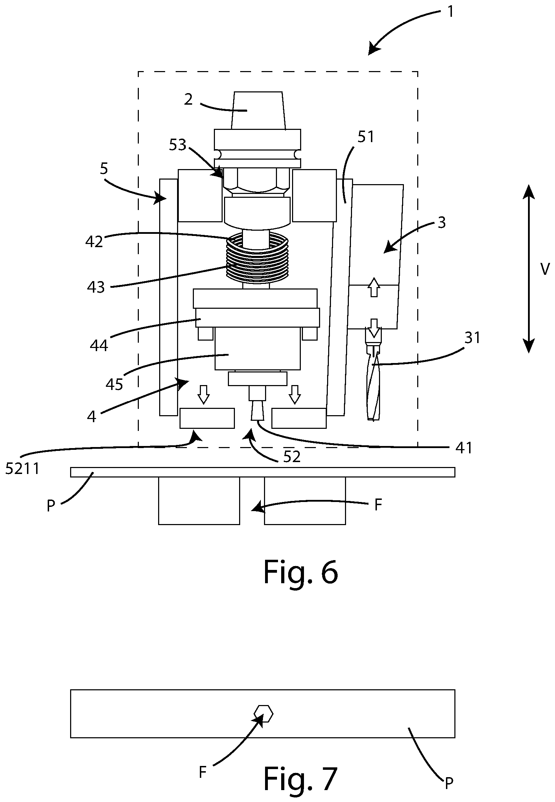

Once the working aggregate 1 is in position to carry out the required machining on the piece, a hole F is created in the piece P being machined (see figures 6 and 7). The hole F is made using the drill bit 31 of the drilling unit 3. The drill bit 31 is designed to precisely drill materials of different densities and characteristics.

Subsequently, the broaching process is carried out, using said rotary broaching unit 4, using the broaching tool 41. This phase ensures a finishing and machining of the hole F previously made using the drill bit 31, modeling shape and size of the hole F, according to the desired specifications.

The drill bit 41 for making the hole on the workpiece P is arranged in an extended or extracted position.

In the broaching step, the drill bit 41 is positioned in the retracted position, so that the broaching tool 41 can operate without interference and with maximum efficiency, ensuring optimal machining of the piece P.

### Advantages

An advantage of the present invention is that it allows flexibility in machining on pieces of different types.

A further competitive advantage is that of allowing broaching machining according to different orientations according to various degrees of freedom, even five or six degrees of freedom.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Working aggregate (1), for machining a workpiece (P), such as panels and the like, made of aluminum, bronze, plastic, wood and the like, comprising:
a power take-off (2) for force coupling to an electro-spindle (141);
a drilling unit (3),
having a drill bit (31),
wherein said drilling unit (3) is operatively coupled to said power take-off (2) to receive driving force for making a hole (F) on said workpiece (P) by means of said drill bit (31); and
a rotary broaching unit (4),
having a broaching tool (41),
wherein said rotary broaching unit (4) is operatively coupled to said power take-off (2) to receive driving force for carrying out rotary broaching processing on the hole (F) made on said workpiece (P) by means of said drill bit (31).

2. Working aggregate (1) according to claim 1, **characterized in that** said rotary broaching unit (4) comprises a transmission shaft (42) for coupling to said power take-off (2).

3. Working aggregate (1) according to the preceding claim, **characterized in that** said rotary broaching unit (4) comprises a protection spring (43) to attenuate the shocks of machining to protect the bearings of said electro-spindle (141).

4. Working aggregate (1) according to the preceding claim, **characterized**
**in that** it comprises a containment casing (5), in which said rotary broaching unit (4) is contained, wherein said containment casing (5) has a lateral surface (51), and
**in that** said drilling unit (3) is coupled to said lateral surface (51).

5. Working aggregate (1) according to the preceding claim, **characterized in that** said containment casing (5) has
a lower opening (52) for the passage of said broaching tool (41), and
an upper opening (53), arranged facing said lower opening (52), in correspondence with which said electro-spindle (141) is installed.

6. Working aggregate (1) according to the preceding claim, **characterized in that** said containment casing (5) has a lower portion (521), on which said opening (52) is obtained, wherein said lower portion (521) is intended to contact said workpiece (P) to keep it in position while the rotary broaching process takes place.

7. Working aggregate (1) according to any one of the preceding claims, **characterized in that** said drilling unit comprises means for moving said drill bit (31), configured so that said drill bit (31) can assume a retracted rest position and an extracted position, in which it can drill on said workpiece (P).

8. Working center (100), for machining parts (P), such as panels and the like, made of aluminum, bronze, plastic, wood, and the like, comprising:
a working surface (120), on which said workpieces (P) to be machined can be arranged and moved, wherein said working surface (120) extends mainly along a first axis (X);
a support bridge (130) arranged above said working surface (120), wherein said support bridge (130) is movable with respect to said working surface (120) along said first axis (X); and
a machining head (140) slidingly movable along said support bridge (130) in a second axis (Y) perpendicular to said first axis (X);
**characterized in that** said working center (100) further comprises a working aggregate (1) according to any one of claims 1-7, coupled to said machining head (140), wherein said working aggregate (1) can be moved with respect to said machining head (140) according to three degrees of freedom.

9. Working center (100) according to the preceding claim, **characterized in that** said support bridge (130) comprises
a guide (131) oriented along said second axis (Y), and
a slide (132) slidably coupled to said guide (131), wherein said machining head (140) is coupled to said slide (132).

10. Working center (100) according to any one of claims 8 or 9, **characterized in that** it comprises members, such as a piston-cylinder group, interposed between said slide (132) and said machining head (140), wherein said members are configured to translate said machining head (140) along a third axis (Z), perpendicular both to said first axis (X) and to said second axis (Y).

11. Working center (100) any one of claims 8 - 10, **characterized in that** said machining head (140) comprises a three-axis joint for the coupling and articulation of said working aggregate (1).

12. Method of machining a workpiece (P), such as panels and the like, made of aluminum, bronze, plastic, wood, and the like, comprising the following steps:
A. providing a working aggregate (1), according to any one of claims 1-7;
B. drilling a hole using said drill bit (31) of said drilling unit (3); and
C. performing a broaching operation using said broaching tool (41) of said rotary broaching unit (4).

13. Method according to the preceding claim, **characterized in that** for the execution of said step B, said drill bit (41) is placed in the extracted position.

14. Method according to any one of claims 12 or 13, **characterized in that** for the execution of said step C said drill bit (41) is placed in the retracted position.
